# EUROPEAN PATENT APPLICATION

(11) **EP 4 261 631 A1**
(43) Date of publication of application: **18.10.2023**
(21) Application number: 21902910.5
(22) Date of filing: 08.03.2021
(51) Int. Cl.: G05B 19/05, G06F 11/36, G06F 8/60, G06F 9/455, G06F 9/50

(54) **CONTROL SYSTEM AND CONTROL METHOD**

(30) Priority: 09.12.2020 JP 2020204061
(71) Applicant: OMRON Corporation, Kyoto 600-8530 (JP)
(72) Inventor: SHIGEMORI, Yutsuka, Kyoto-shi, Kyoto 600-8530 (JP)
(74) Representative: Mewburn Ellis LLP
(86) International application number: PCT/JP2021/008916
(87) International publication number: WO 2022/123803

(57) **Abstract**

The control system is equipped with: a generating module configured to generate a container inclusive of an image of runtime including a user program that defines computations for control of a control object and an execution environment of the user program; and an orchestrator configured to release the container to one or both of the control device and the server. The control device and the server each have a container engine for container deployment and each deploy the container released by the orchestrator to generate an instance of the runtime image and perform the computations for control.

## Description

### TECHNICAL FIELD

This disclosure relates to a control system including a control device and a server and to a control method for use in the control system.

### BACKGROUND ART

The startup of a control system equipped with a plurality of controllers (typically, PLC (programmable logic controllers) conventionally requires a series of operations including, for example, designing, implementation and verification. The controllers are each designed, implemented and verified and are then combined with other devices. To allow the controllers and devices to be consolidated into an operable system, the operations; designing, implementation and verification, need to be completed for all of the controllers by then. These operations may be difficult to proceed at an equal rate due to different complexities and properties of the controllers. Such operational variability may lead to latency time before the controllers and devices are consolidated and operable as a system.

Apart from the controller-related technical fields, the conventional IT technologies are now offering scalable software services by dynamically scaling up and down the computer resources using the technique of container deployment and/or orchestration. For example, Japanese National Patent Publication No. 2015-512091 (patent literature 1) describes a management method for computer cloud resources.

### CITATION LIST

### PATENT LITERATURE

PTL 1: Japanese National Patent Publication No. 2015-512091

### SUMMARY OF THE INVENTION

### TECHNICAL PROBLEM

For a plurality of controllers and a system in which a plurality of controllers are combined, a technical configuration(s) is desirably developed in order to facilitate the operations described earlier; designing, implementation and verification, and also to fully leverage resources of the controllers in a scalable manner.

This disclosure is directed to finding and offering a solution(s) to provide such a technical configuration.

### SOLUTION TO PROBLEM

According to an aspect of this disclosure, a control system is provided that includes one or more control devices and one or more servers. The control system is equipped with: a generating module configured to generate a container inclusive of an image of runtime including a user program that defines computations for control of a control object and an execution environment of the user program; and an orchestrator configured to release the container to one or both of the control device and the server. The control device and the server each have a container engine for container deployment and each deploy the container released by the orchestrator to generate an instance of the runtime and perform the computations for control. This may allow either one of the control device or the server to deploy and run the container including the runtime image. Thus, the execution of computations for control may be readily verified without any available control device. Further advantageously, the computations for control currently carried out on the server may be easily transferred to and performed by the control device.

The container engine of the server may generate, in addition to the instance of the runtime, an instance of an emulator configured to emulate input and output data transmitted and received to and from the control object. This may allow the computations for control to be easily verified on the server without any device being connected to the control device.

When the container engine of the server generates the instance of the runtime, the container engine of the control device may generate an instance of a network server that mediates, to the server, input and output data exchanged through a device connected to the control device. This may allow the computations for control per se to be performed on the server while taking advantage of the I/O data exchanged with a device(s) connected to the control device(s), providing accessibility to and full use of resources offered by the server.

The container engine of the server may generate an instance of a virtual I/O driver configured to emulate an I/O driver that is in charge of accessing the device connected to the control device when the container engine of the server generates the instance of the runtime. This may offer an execution environment substantially the same as in the computations for control being executed on the control device. Thus, the runtime for computations for control may be used on the server as well.

The container may include at least one of an image deployed only by the container engine of the control device and an image deployed only by the container engine of the server. The container thus redundantly including the images may allow the computations for control to be performed without having to depend on where to be deployed.

The control system may further include a repository for address management in order to access the container engine of the server when the container engine of the server generates the instance of the runtime. When the computations for control are executed on the server, addresses allocated to execution environments may differ from one another, which, however, may no longer be a bottleneck when the repository is used for reference.

The control system may further include a node manager configured to virtually generate a node that includes a container engine configured to deploy the container when the container is released to the server and no container engine is present. Thus, a node in charge of for computations for control may be optionally generated as requested.

The control system may further include a container hub configured to register the container generated by the generating module in a manner that the container is associated with identification information of the control device to which the container is releasable. This may allow reuse of the container once generated.

The orchestrator may select the container to be released and determine the destination of release in accordance with a user operation. This may allow a user to release any container to be released into an execution environment demanding the release depending on the current status of the control system.

According to another aspect of this disclosure, a control method is provided that is used in a control system including one or more control devices and one or more servers. The control method includes: generating a container inclusive of an image of runtime including a user program that defines computations for control of a control object and an execution environment of the user program; and releasing the container to one or both of the control device and the server. The control device and the server each have a container engine for container deployment and each deploy the container that has been released to generate an instance of the runtime and perform the computations for control.

### ADVANTAGEOUS EFFECTS OF INVENTION

According to one aspect of this disclosure, a series of operations including, for example, designing, implementation and verification, may be facilitated in a plurality of control devices and a system in which a plurality of control devices are combined. According to another aspect of this disclosure, resources of the control device(s) may be fully leveraged in a scalable manner.

### BRIEF DESCRIPTION OF THE DRAWINGS

Fig. 1 is a drawing that schematically illustrates an overall configuration of a control system according to an embodiment of this disclosure.
Fig. 2 is a drawing that illustrates an outline of a container-used process in the control system according to the embodiment.
Fig. 3 is a diagram that illustrates modes that are set and run in the control system according to the embodiment.
Fig. 4 is a block diagram that illustrates an exemplified hardware configuration of PLC in the control system according to the embodiment.
Fig. 5 is a block diagram that illustrates an exemplified hardware configuration of a server in the control system according to the embodiment.
Fig. 6 is a block diagram that illustrates an exemplified hardware configuration of a development/maintenance terminal in the control system according to the embodiment.
Fig. 7 is a diagram that schematically illustrates an exemplified functional configuration of the control system according to the embodiment.
Fig. 8 is a diagram that illustrates an exemplified functional configuration that allows the modes to be set and run in the control system according to the embodiment.
Fig. 9 is a diagram that illustrates an exemplified configuration of a PLC runtime container used in the control system according to the embodiment.
Fig. 10 is a diagram that illustrates an exemplified functional configuration associated with a process to generate the PLC runtime container in the control system according to the embodiment.
Fig. 11 is a diagram that illustrates an exemplified functional configuration associated with release and execution control of the PLC runtime container in the control system according to the embodiment.
Fig. 12 is a diagram that schematically illustrates typical use cases of the control system according to the embodiment.
Fig. 13 is a diagram that schematically illustrates an example of processing steps in a use case illustrated in Fig. 12(A).
Fig. 14 is a diagram that schematically illustrates another example of processing steps in the use case illustrated Fig. 12(A).
Fig. 15 is a diagram that schematically illustrates an example of processing steps in a use case illustrated in Fig. 12(B).
Fig. 16 is a diagram that schematically illustrates another example of processing steps in the use case illustrated in Fig. 12(B).
Fig. 17 is a diagram that schematically illustrates an example of processing steps in a use case illustrated in Fig. 12(C).
Fig. 18 is a flow chart of an example of processing steps for generation of a PLC runtime container in the control system according to the embodiment.
Fig. 19 is a flow chart of an example of processing steps for release and execution control of the PLC runtime container in the control system according to the embodiment.

### DESCRIPTION OF EMBODIMENTS

An embodiment of the disclosure is hereinafter described in detail referring to the accompanying drawings. The same or similar components and units in the drawings are simply illustrated with the same reference signs, redundant description of which will basically be omitted.

### <A. Example of application>

First, an exemplified situation is given and described below to which the technology disclosed herein is applicable.

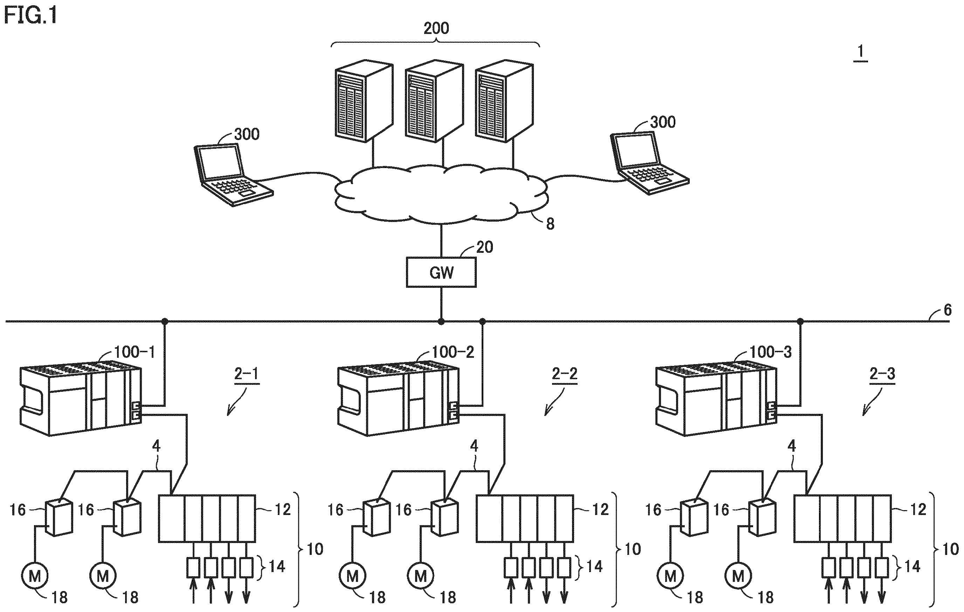

Fig. 1 is a drawing that schematically illustrates an overall configuration of a control system 1 according to an embodiment of this disclosure. With reference to Fig. 1, control system 1 according to this embodiment includes one or more PLC systems 2-1, 2-2, 2-3 (hereinafter, may be collectively referred to as "PLC system 2"), one or more servers 200, and a development/maintenance terminal 300. In some or all of structural elements of or relevant to PLC systems 2-1, 2-2, 2-3 described below, their reference signs may be numbered likewise; "-1", "-2", "-3", in case these systems need to be distinguished from one another.

Each PLC system 2 may otherwise be referred to as "line". These systems may control the whole plant or factory or may control a particular one of production facilities and/or manufacturing apparatuses installed in the plant or factory. The principal structural elements of PLC systems 2-1, 2-2, 2-3 are PLC devices (Programmable Logic Controllers) 100-1, 100-2, 100-3 (hereinafter, may be collectively referred to as "PLC 100"). The PLC is a typical example of control devices used for a control object.

PLC 100 is connected to field devices 10. Field devices 10 each contain an optional number of units or devices required to control a control object. To be more specific, field devices 10 each include a device(s) used to transmit and receive information to and from a control object (for example, production facility(ies), manufacturing apparatus(es), or sensor(s) and/or actuator(s) included in the manufacturing apparatus(es)). In the system configured as illustrated in Fig. 1, field devices 10 each include a remote I/O (Input/Output) 12, a relay group 14, a servo driver 16, and a servo motor 18.

PLC 100 obtains information from field device 10 and runs computations for control in accordance with a user program prepared beforehand to generate information to be supplied to field device 10. In the description below, information obtained by PLC 100 from field device 10 may be referred to as "input data", while information supplied to field device 10 may be referred to as "output data". The input data and the output data may otherwise be referred to as "input and output data" or "I/O data".

In the example illustrated in Fig. 1; PLC 100 and field device 10 are connected to each other through a control system network 4. PLC 100 and field device 10 may instead be connected to each other with a hardwire. Field devices 10 may each include an optional device(s) in addition to the ones illustrated in Fig. 1.

Control system network 4 may preferably be compliant with a communication protocol for industrial use. Known examples of the communication protocol may include EtherCAT (registered trademark), EtherNet/IP (registered trademark), DeviceNet (registered trademark), and CompoNet (registered trademark).

PLC systems 2 are each allowed to access server 200 on Internet 8 through an information system network 6 and a gateway 20. Information system network 6 may preferably be compliant with a communication protocol for general purse, for example, Ethernet (registered trademark).

Server 200 provides an environment in which a container(s) is deployable and executable and is in charge of container release control. In this specification, "release" of a container include a process to provide a target site for execution with a target container and a process to provide a direction for feasibility of execution at the target site (for example, process to provide a direction for deployment). These processes and features will be described later in detail.

Servers 200 may be installed on the cloud through Internet 8 or may be installed in a local network where PLC system 2 is set without access to Internet 8. Servers 200 may be installed in any optional manner depending on the levels of performance and functionality required of this server.

A user is allowed to manipulate development/maintenance terminal 300 to enable processes described later through accesses to server 200.

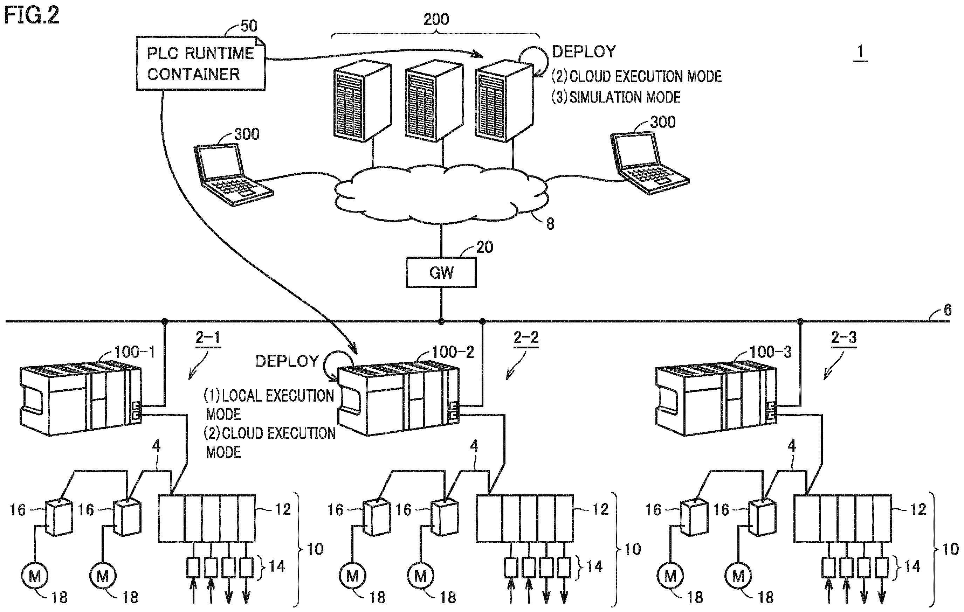

Fig. 2 is a drawing that illustrates an outline of a container-used process in control system 1 according to this embodiment.

In this specification, the term, "PLC runtime", refers to a program(s) and library(ies) required to run the computations for control in PLC 100 of PLC system 2. The term, "PLC runtime", may include, in addition to such a program(s) and library(ies) required to run the computations for control, an entity(ies) and an execution environment(s) that enable the computations for control. Typically, the "PLC runtime" includes a user program that defines the computations for control of a control object carried out by PLC 100 (for example, program optionally created in compliance with IEC61131-3), and a PLC engine(s) (firmware) which is an execution environment of the user program.

In control system 1 according to this embodiment, "PLC runtime container" refers to a packaged container prepared so that the PLC runtimes are feasible not only in PLC 100 but also in a virtual environment(s) provided by server 200. An application execution environment which is logically independent may be successfully provided by deploying the "PLC runtime container" on a host OS (Operating System). The term, "PLC runtime container", may encompass, in its scope, such an application execution environment. A program(s) (application(s)) and a library(ies) constituting the "PLC runtime container" and how to generate the "PLC runtime container" will be described later in detail.

With reference to Fig. 2, a PLC runtime container 50 is releasable to server 200 and PLC 100 of PLC system 2. A target site for deployment of PLC runtime container 50 and details of the deployment is optimized depending as required by the current status. Thus, at least the following three modes may be set and run; 1) local execution mode, 2) cloud execution mode, and 3) simulation mode.

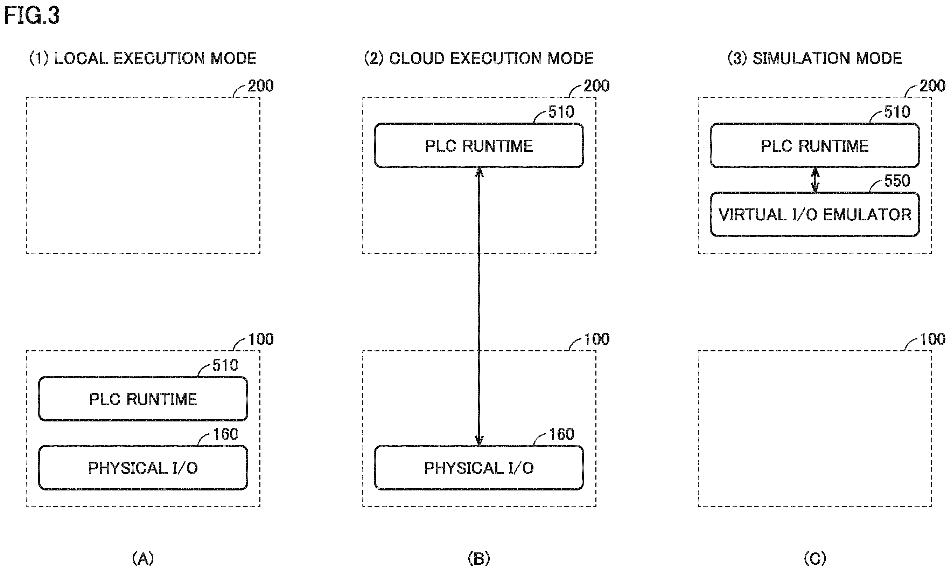

Fig. 3 is a diagram that illustrates the modes employed in control system 1 according to this embodiment.

With reference to Fig. 3(A), the local execution mode 1) represents an operational status in which PLC 100 executes the computations for control using I/O data exchanged through field device 10. To be more specific, PLC runtime 510 and physical I/O 160 are enabled in PLC 100. Physical I/O 160 is an abstraction layer including field device 10 and control system network 4 (both illustrated in Fig. 1). The local execution mode may be a mode for production run.

With reference to Fig. 3(B), the cloud execution mode 2) represents an operational status in which the computations for control are carried out on server 200 while the I/O data is exchanged through field device 10 connected to PLC 100. To be more specific, physical I/O 160 runtime 200 is enabled in PLC 100, and PLC runtime 510 is enabled on server 200. The cloud execution mode may be available for the production run and may also be available for development and verification of a user program.

With reference to Fig. 3(C), the simulation mode 3) represents an operational status in which field device 10 connected to PLC 100 is not an indispensable device. In this mode, server 200, while emulating field device 10, executes the computations for control. To be more specific, PLC runtime 510 and a virtual I/O emulator 550 are enabled on server 200. Virtual I/O emulator 550 is a module that emulates the behavior of physical I/O 160. The simulation mode may be available for development and verification of a user program.

In control system 1 according to this embodiment, a user program, using PLC runtime container 50, may be easily developed and verified and also seamlessly shifted to the production run if PLC system 2, in part or in whole, is currently not present.

### <B. Hardware configuration>

Next, a description is given below to an exemplified hardware configuration of a device constituting the control system according to this embodiment.

### (b1: PLC 100)

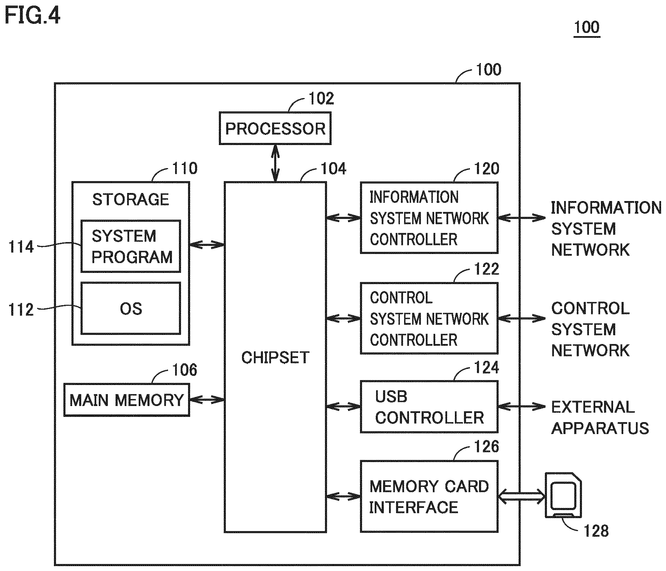

Fig. 4 is a block diagram that illustrates an exemplified hardware configuration of PLC 100 in control system 1 according to this embodiment. With reference to Fig. 4, PLC 100 may include a processor 102, for example, CPU (Central Processing Unit) or MPU (Micro-Processing Unit), a chipset 104, a main memory 106, a storage 110, and an information system network controller 120, a control system network controller 122, a USB (Universal Serial Bus) controller 124, and a memory card interface 126.

Processor 102 reads programs stored in storage 110 and then loads and runs the read programs in main memory 106 to execute the computations for control of a control object. Chipset 104 controls data transmission between processor 102 and the other units and components.

In storage 110 are storable an OS 112 for basic processes and a system program 114 for other processes, for example, deployment of PLC runtime container.

Information system network controller 120 controls data exchanged with such a device as development/maintenance terminal 300 through information system network 6.

Control system network controller 122 controls data exchanged with field device 10 through control system network 4.

USB controller 124 controls the data exchanged with an external apparatus(es) (for example, support device) through USB connection.

Memory card interface 126 is detachably mountable with a memory card 128, so that various pieces of data (for example, user program, trace data) can be written in and read from memory card 128.

Fig. 4 shows an example in which processor 102 runs the program to enable the processes required. Instead, the processes, in part or in whole, may be implemented using a dedicated hardware circuit (for example, ASIC (Application Specific Integrated Circuit) or FPGA (Field-Programmable Gate Array). The principal unit of PLC 100 may be implemented using a hardware device configured in compliance with a general-purpose architecture (for example, industrial personal computer derived from general-purpose computer). In this instance, the virtualization technology may be employed, in which two or more operating systems (OS) for different uses may be operated in parallel, and necessary applications may be executed on each OS.

### (b2: Server 200)

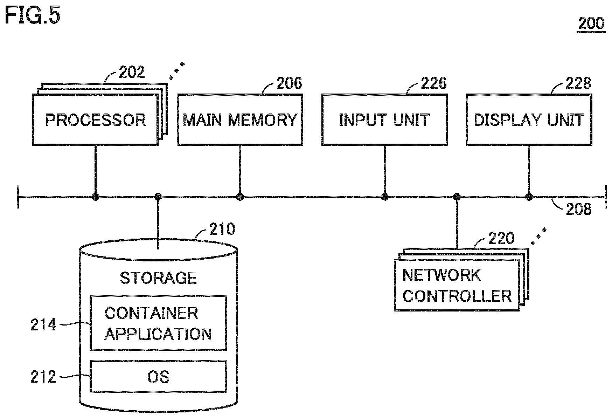

Fig. 5 is a block diagram that illustrates an exemplified hardware configuration of server 200 in control system 1 according to this embodiment. With reference to Fig. 5, server 200 includes one or more processors 202, examples of which are CPU or MPU. Server 200 further includes a main memory 206, a storage 210, one or more network controllers 220, an input unit 226, and a display unit 228. These structural elements are interconnected through a bus 208

Processor 202 reads programs stored in secondary storage 210 and then loads and runs the read programs in main memory 206 to execute, for example, processes described later.

Storage 210 may include, for example, HDD (Hard Disk Drive) and/or SSD (Flash Solid State Drive). In storage 210 are typically storable an OS 212 for basic processes, and a container application 214 for processes offered by server 200 as described later.

Network controller 220 controls data exchanged with apparatuses through an optional network.

Input unit 226 includes a keyboard and a mouse to receive inputs from a user. Display unit 228 includes a display and outputs, for example, processing results of processor 202.

In Fig. 5 is illustrated a structural example in which required processes are executable when processor 202 runs the programs. Instead, such processes may be implemented, in part or in whole, using a dedicated hardware circuit (for example, ASIC or FPGA).

### (b3: Development/maintenance terminal 300)

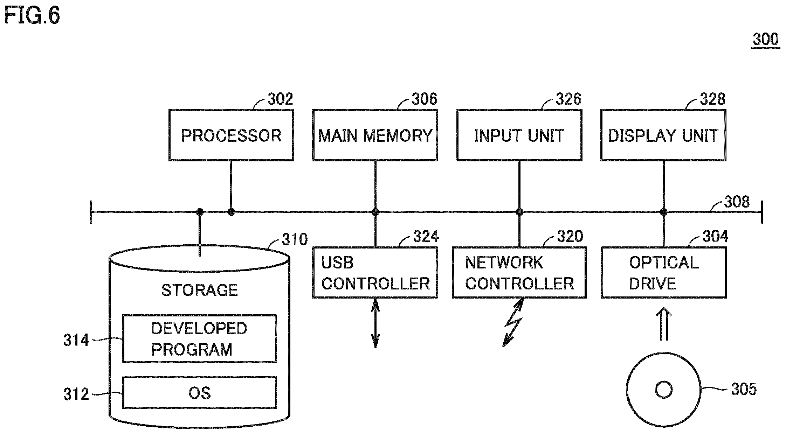

Fig. 6 is a block diagram that illustrates an exemplified hardware configuration of development/maintenance terminal 300 in control system 1 according to this embodiment. With reference to Fig. 6, development/maintenance terminal 300 includes one or more processors 302, examples of which are CPU or MPU. Development/maintenance terminal 300 further includes a main memory 306, a storage 310, one or more network controllers 320, a USB controller 324, an input unit 326, and a display unit 328. These structural elements are interconnected through a bus 308

Processor 302 reads programs stored in storage 310 and then loads and runs the read programs in main memory 306 to execute, for example, processes required of development/maintenance terminal 300.

Storage 310 may include, for example, HDD and/or SSD. In storage 310 are typically stored OS 312 and a developed program 314 to provide directions for processes described later. In storage 310 may be storable any other programs but the programs illustrated in Fig. 6, if necessary.

Network controller 320 controls data exchanged with, for example, PLC 100 optionally through an optional control system network 4.

USB controller 324 controls data exchanged with an external apparatus(es) through USB connection.

Input unit 326 includes, for example, a keyboard, a mouse and a touch panel to receive inputs from a user. Display unit 228 includes, for example, a display and indicators to output processing results of processor 202.

Development/maintenance terminal 300 may include an optical drive 304. Optical drive 304 is used to read a program from a recording medium 305 in which a computer-readable program(s) is non-transitorily storable (for example, DVD (Digital Versatile Disc)) and to store the read program in storage 310.

Programs executed on development/maintenance terminal 300 may be installed into computer-readable recording medium 305 or may be downloaded through an optional network server into the recording medium.

In Fig. 6 is illustrated a structural example in which required processes are executable when processor 302 runs the programs. Instead, such processes may be implemented, in part or in whole, using a dedicated hardware circuit (for example, ASIC or FPGA).

### <C. Functional configuration of control system 1>

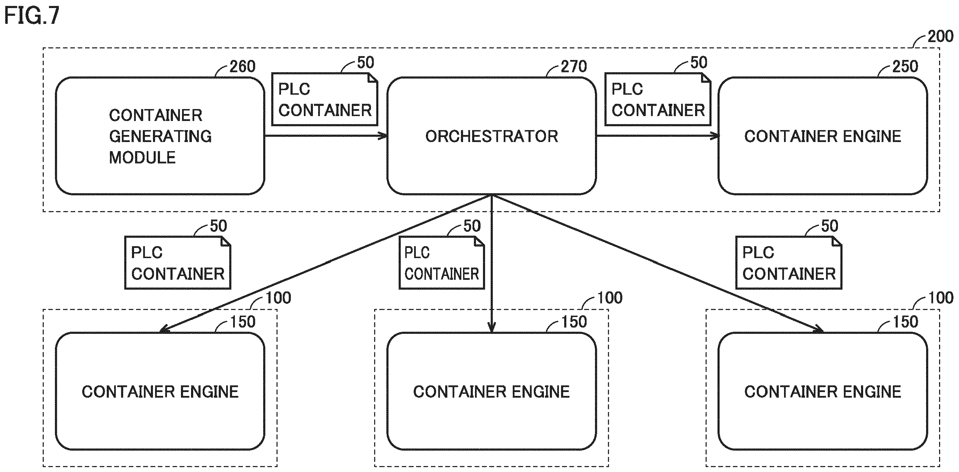

Fig. 7 is a diagram that schematically illustrates an exemplified functional configuration of control system 1 according to this embodiment. With reference to Fig. 7, PLC 100 has a container engine 150. Container engine 150 offers an execution environment for containers. Container engine 150 generates a module (instance) for execution of processes by deploying an image of the module based on, for example, a manifest included in PLC runtime container 50.

Server 200 includes a container engine 250, a container generating module 260, and an orchestrator 270.

As with container engine 150, container engine 250 generates a module (instance) for execution of processes by deploying an image of the module based on, for example, the manifest included in PLC runtime container 50.

Container engines 150 and 250 are CaaS (Container as a Service) platforms. In the context of release of PLC runtime container 50, container engines 150 and 250 may be each referred to as "node".

Container generating module 260 generates PLC runtime container 50 in response to a user operation. In this embodiment, container generating module 260 generates PLC runtime container 50 inclusive of an image of PLC runtime from a user program to be run in PLC 100 and information of relevant settings. Container generating module 260 generates PLC runtime container 50 inclusive of an image of PLC runtime including a user program that defines computations for control of a control object and an execution environment of the user program.

Orchestrator 270 is in charge of management of PLC runtime container 50. Orchestrator 270 registers PLC runtime container 50 generated by container generating module 260 in a container hub and controls execution of PLC runtime container 50 registered in the container hub in response to a user operation; which of hosts should be selected for execution of PLC runtime container 50 (in this embodiment, container engine 150 of PLC 100 or container engine 250 of server 200). Thus, orchestrator 270 releases PLC runtime container 50 to one or both of PLC 100 and server 200.

PLC 100 and server 200 respectively have container engine 150 and container engine 250 for deployment of PLC runtime container 50. PLC 100 and server 200 accordingly deploy PLC runtime container 50 released by orchestrator 270 to generate an instance of PLC runtime image and perform the computations for control.

Orchestrator 270 takes charge of the following; startup/stoppage control of PLC runtime container 50, network connection control between the hosts, storage control, host scheduling control for execution of PLC runtime container 50, and status control of PLC runtime container 50 being executed in the host.

The release of PLC runtime container 50 by orchestrator 270 may follow a predefined schedule, or PLC runtime container 50 to be released and where to be released may be determined in response to a user operation.

The processing details of the respective structural elements will be described later.

### <D. Use of PLC runtime container>

Below are described examples of how the modes illustrated in Figs. 2 and 3 are set and run using PLC runtime container 50. The description given below mostly focuses on functional features and processes provided by container engine 150 of PLC 100 or container engine 250 of server 200.

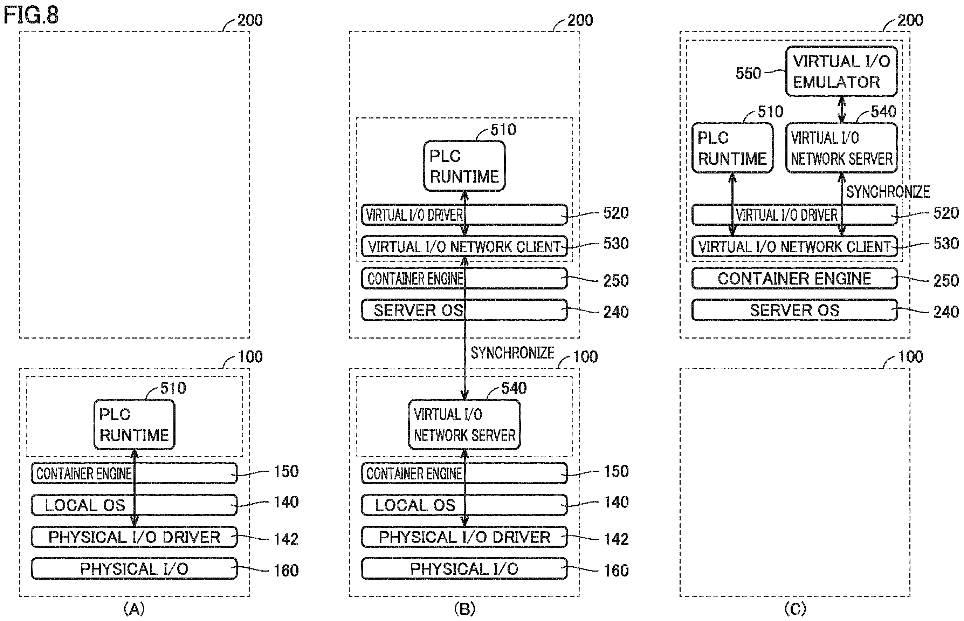

Fig. 8 is a diagram that illustrates an exemplified functional configuration that allows the modes to be set and run in control system 1 according to this embodiment.

With reference to Fig. 8(A), PLC 100 has a local OS 140 and a container engine 150.
(1) In the local execution mode, an instance of PLC runtime 510 is generated on container engine 150. A physical I/O driver 142 is also prepared for PLC 100, which is used to allow PLC runtime 510 and physical I/O 160 to communicate with each other. The computations for control by PLC 100 are accomplished by the functional configuration illustrated in Fig. 8(A).

With reference to Fig. 8(B), in the cloud execution mode 2), an instance of a virtual I/O network server 540 is generated, in place of PLC runtime 510, on container engine 150 of PLC 100. Virtual I/O network server 540 is in charge of mediating data exchanged with server 200 and physical I/O 160. Virtual I/O network server 540 renders an I/O processing result including physical I/O 160 synchronous with a virtual I/O network client 530.

When container engine 250 of server 200 generates an instance of the image of PLC runtime 510, container engine 150 of PLC 100 generates an instance of virtual I/O network server 540 that mediates, to server 200, I/O data exchanged through field device 10 connected to PLC 100.

Server 200 has a server OS 240 and a container engine 250. In 2) cloud execution mode, an instance of PLC runtime 510 is generated on container engine 250. Further, instances of a virtual I/O driver 520 and of virtual I/O network client 530 are generated on container engine 250.

Thus, in the cloud execution mode 2), an instance of PLC runtime 510 is generated on server 200 and an instance of virtual I/O network server 540 is generated on PLC 100.

Virtual I/O network client 530 transmits and receives I/O data to and from virtual I/O network server 540.

Virtual I/O driver 520 emulates physical I/O driver 142 of PLC 100 illustrated in Fig. 8(A). This driver, in response to an internal command for I/O data access from PLC runtime 510, executes a process similar to accessing physical I/O 160 of PLC 100. Thus, an instance of virtual I/O driver 520 that emulates physical I/O driver 142 in charge of accessing field device 10 connected to PLC 100 is generated when container engine 250 of server 200 generates an instance of the image of PLC runtime 510.

Data exchange between virtual I/O network server 540 and virtual I/O network client 530 has transparency in regard to PLC runtime 510. This may be rephrased that identical commands for accessing physical I/O 160 are issued in PLC runtime 510 run in PLC 100 and in PLC runtime 510 run on server 200. Virtual I/O driver 520, virtual I/O network client 530 and virtual I/O network server 540, in response to the identical access commands, performs a process substantially the same as the process performed by physical I/O driver 142 of PLC 100. Thus, substantially the same process may dispense with having to change processing details when PLC runtime 510 is run on different execution environments, as illustrated in Figs. 8(A) to 8(C).

With reference to Fig. 8(C), instances of virtual I/O emulator 550 and virtual I/O network server 540 are generated on container engine 250 in the simulation mode 3).

Virtual I/O emulator 550 is a module that simulates physical I/O 160 of PLC 100. This emulator performs, for example, a process to generate input data in response to output data from PLC runtime 510. Insofar as simulation using PLC runtime 510 can be successfully done, virtual I/O emulator 550 may directly return the output data received from PLC runtime 510 into input data (so-called loop-back processing). Virtual I/O emulator 550 having such a model as servo driver may be allowed to input the output data received from PLC runtime 510 to the model and use a processing result thereby obtained as input data.

In the simulation mode 3), container engine 250 of server 200 generates, as well as an instance of PLC runtime 510, an instance of virtual I/O emulator 550 that emulates I/O data transmitted and received to and from an object to be controlled.

Virtual I/O network server 540 executes a process similar to that of virtual I/O network server 540 of PLC 100 illustrated in Fig. 8(B). Virtual I/O network server 540 virtually generates a communication path that allows I/O data to be exchanged between virtual I/O network client 530 and virtual I/O network server 540. Virtual I/O network server 540 renders an I/O processing result obtained by virtual I/O emulator 550 synchronous with virtual I/O network client 530.

Depending on the mode set and run, the current connection of virtual I/O network client 530 is suitably changed to one of virtual I/O network server 540 of PLC 100 and virtual I/O network server 540 of server 200.

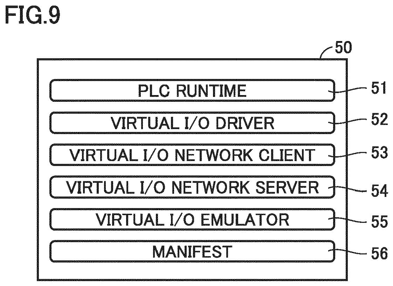

Fig. 9 is a diagram that illustrates an exemplified configuration of PLC runtime container 50 used in control system 1 according to this embodiment. With reference to Fig. 9, PLC runtime container 50 includes a PLC runtime image 51, a virtual I/O driver image 52, a virtual I/O network client image 53, a virtual I/O network server image 54, and a virtual I/O emulator image 55. These images are data prepared in a format that allows required processes to be executed when they are deployed.

PLC runtime container 50 further includes a manifest 56. Manifest 56 includes a definition that suggests which of the images should be validated and what resource should be used in each execution environment and mode.

With reference to manifest 56, container engine 150, 250 selects an image necessary from the module images included in PLC runtime container 50. Typically, manifest 56 includes definitions of the features used in the modes illustrated in Figs. 8(A) to 8(C).

As illustrated in Fig. 9, PLC runtime container 50 may include an image(s) deployed only by container engine 150 of PLC 100 (for example, virtual I/O network server image 54). PLC runtime container 50 may include an image(s) deployed only by container engine 250 of server 200 (for example, virtual I/O driver image 52, virtual I/O network client image 53, virtual I/O emulator image 55).

In Fig. 9 is illustrated an example in which the same PLC runtime container 50 is used. PLC runtime container 50, however, may be differently configured depending on where to be released and a selected one of the modes. Specifically, PLC runtime container 50 including an image necessary in the selected mode and corresponding manifest 56 may be generated and released.

### <E. Generating PLC runtime container>

Next, functional features and processes associated with the generation of PLC runtime container 50 are hereinafter described.

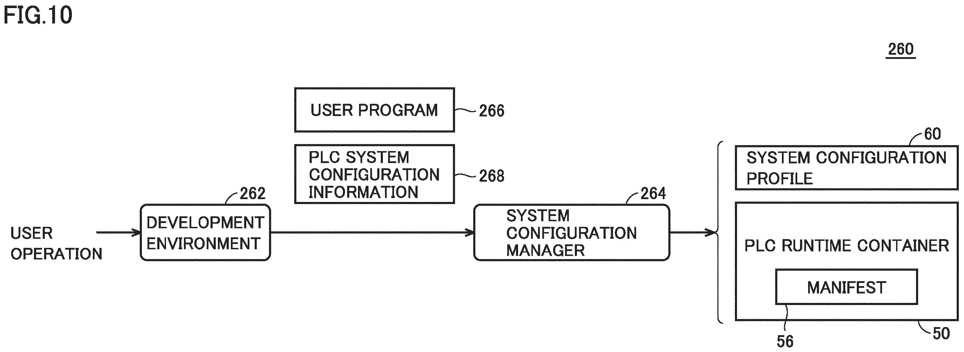

Fig. 10 is a diagram that illustrates an exemplified functional configuration associated with the generation of PLC runtime container 50 in control system 1 according to this embodiment. With reference to Fig. 10, container generating module 260 of server 200 (see Fig. 7) include a development environment 262 and a system configuration manager 264.

Development environment 262 generates and outputs a user program 266 executable on PLC system 2 and a PLC system configuration information 268 that defines the configuration of PLC system 2. Typically, development environment 262 includes such features as editing, debugging, simulation, and compatibility check.

Development environment 262 may be enabled on server 200 or may be enabled by having development/maintenance terminal 300 run a developed program.

A user defines, on development environment 262, the configuration of PLC system 2 included in control system 1. Details of the configuration defined then may be the number of PLC devices 100 and resources used on server 200. A user generates user program 266 suitable for a control object on development environment 262.

A user may be allowed to input an instruction to release and deploy PLC runtime container 50 through development environment 262.

In response to a user operation, system configuration manager 264 generates PLC runtime container 50 based on user program 266 and PLC system configuration information 268. PLC runtime container 50 includes manifest 56 in addition to the module images.

System configuration manager 264, which generates PLC runtime container 50, further generates and outputs a system configuration profile 60. System configuration profile 60 contains information including, for example, the destination of release of PLC runtime container 50 and identification information of PLC 100.

System configuration profile 60 may further contain pieces of identification information of a container hub 276 and of PLC runtime container 50 to be used, information indicating approved or unapproved use of a virtual node(s), and the largest number of usable virtual nodes. System configuration profile 60 also includes information of a repository where information associated with PLC runtime container 50 is registered.

System configuration profile 60 may be generated for each control system 1 or may be generated for PLC system(s) 2 included in control system 1.

System configuration profile 60 may further include a container configuration profile. The container configuration profile may further include, for example, identification information used to identify PLC runtime container 50 and pieces of information of PLC 100 targeted by PLC runtime container 50 and of any device(s) connected to PLC 100 (motor, robot). The container configuration profile may further include, for example, information on whether any additional functional feature is necessary on the development environment (may otherwise be referred to as "functional module").

### <F. Release and execution control of PLC runtime container>

Next, functional features and processes associated with the release and execution control of PLC runtime container 50 are hereinafter described.

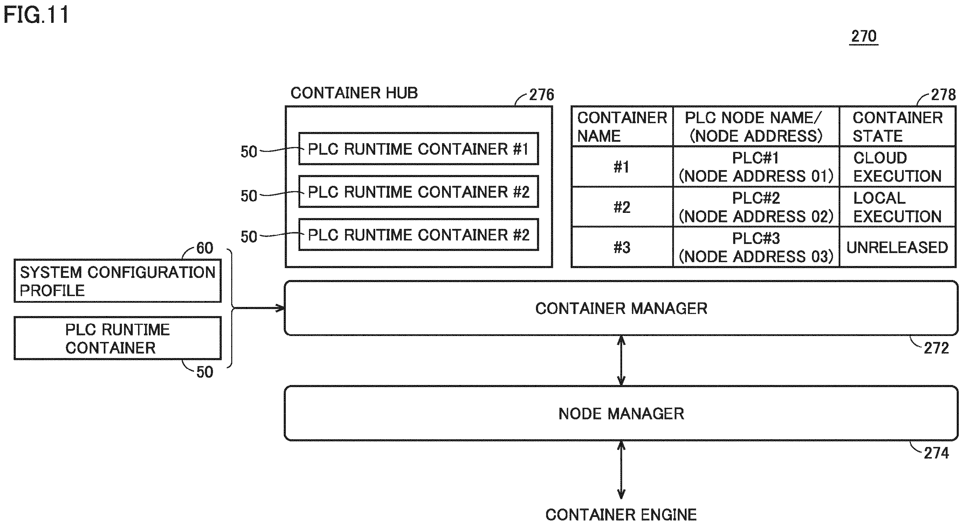

Fig. 11 is a diagram that illustrates an exemplified functional configuration associated with the release and execution control of PLC runtime container 50 in control system 1 according to this embodiment. With reference to Fig. 11, orchestrator 270 of server 200 (see Fig. 7) includes a container manager 272 and a node manager 274.

Container manager 272 is in charge of release control, deployment control, and execution control of PLC runtime container 50. Container manager 272 is also in charge of management of container hub 276 in which PLC runtime container 50 is registered and repository 278 for status control of PLC runtime container 50 registered in container hub 276.

Container manager 272, when provided with PLC runtime container 50 from container generating module 260 (see Fig. 10), consults relevant system configuration profile 60, registers PLC runtime container 50 in container hub 276 and adds an entry to repository 278.

Container hub 276 registers PLC runtime container 50 generated by container generating module 260 in a manner that the container to be registered is associated with identification information of releasable PLC 100.

The entries added to repository 278 each include a container name for identifying PLC runtime container 50 registered in container hub 276, a namespace that allows each node name and node address to correspond to each other, and a container status that indicates the status of PLC runtime container 50. The namespace is for mapping of a node name designated by PLC runtime 510 with a corresponding node address. Thus, repository 278 is in charge of address management for accessing container engine 250 of server 200 when container engine 250 generates an instance of PLC runtime 510.

Node manager 274, as requested by, for example, container manager 272, may search a node of where PLC runtime container 50 will be released (or container engine 150 of PLC 100 or container engine 250 of server 200) and obtains the status of the node and further generates a virtual node.

In regard to generating a virtual node, node manager 274, when PLC runtime container 50 is released to server 200, virtually generates a node including container engine 250 in case there is no container engine 250 that deploys PLC runtime container 50.

### <G. Use cases>

Next, some use cases are hereinafter described.

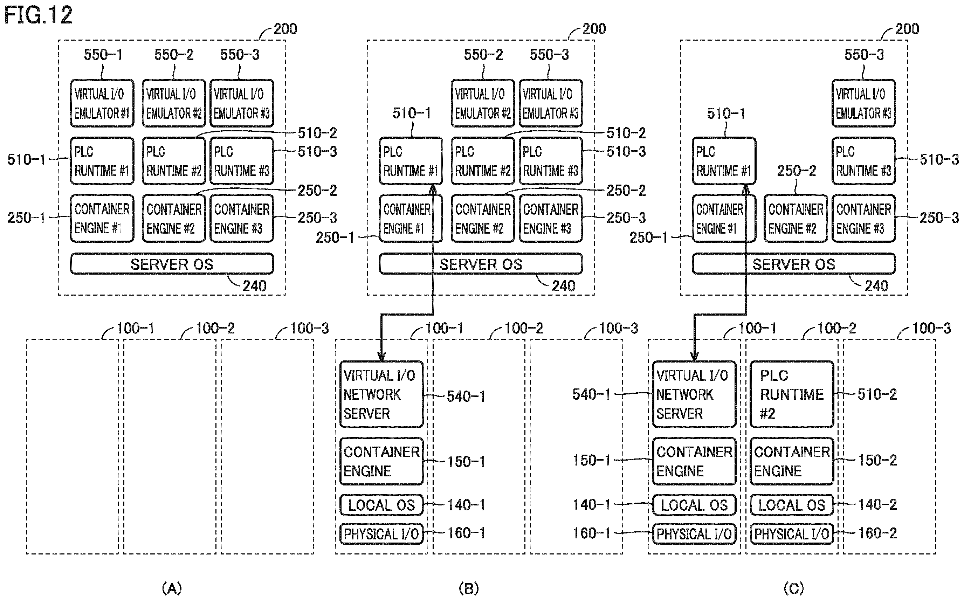

Fig. 12 is a diagram that schematically illustrates typical use cases of control system 1 according to this embodiment. The use cases illustrated in Fig. 12 are suggested based on the assumption that PLC 100-1, PLC 100-2, and PLC 100-3 control a control object.

A use case 1 illustrated in Fig. 12(A) presents an example in which all of the computations for control by PLC 100-1, PLC 100-2, and PLC 100-3 are simulated on server 200. This may be rephrased that the simulation mode is set and run in all of PLC 100-1, PLC 100-2, and PLC 100-3. In this instance, PLC 100-1, PLC 100-2, and PLC 100-3 are not necessarily real existing devices.

A use case 2 illustrated in Fig. 12(B) presents an example in which the computations for control by PLC 100-1 are carried out on server 200 using physical I/O 160-1 of PLC 100-1. This may be rephrased that the cloud execution mode is set and run in PLC 100-1. In in PLC 100-2 and PLC 100-3, the simulation mode is set and run as illustrated in Fig. 12(A). In this instance, PLC 100-2 and PLC 100-3 are not necessarily real existing devices.

A use case 3 illustrated in Fig. 12(C) presents an example in which the computations are carried out by PLC 100-2 using its own physical I/O 160-2. This may be rephrased that the local execution mode is set and run in PLC 100-2. The cloud execution mode is set and run in PLC 100-1 as in Fig. 12(B), while the simulation mode is set and run in PLC 100-3 as in Fig. 12(A). In this instance, PLC 100-3 is not necessarily a real existing device.

### <g1: Use case 1>

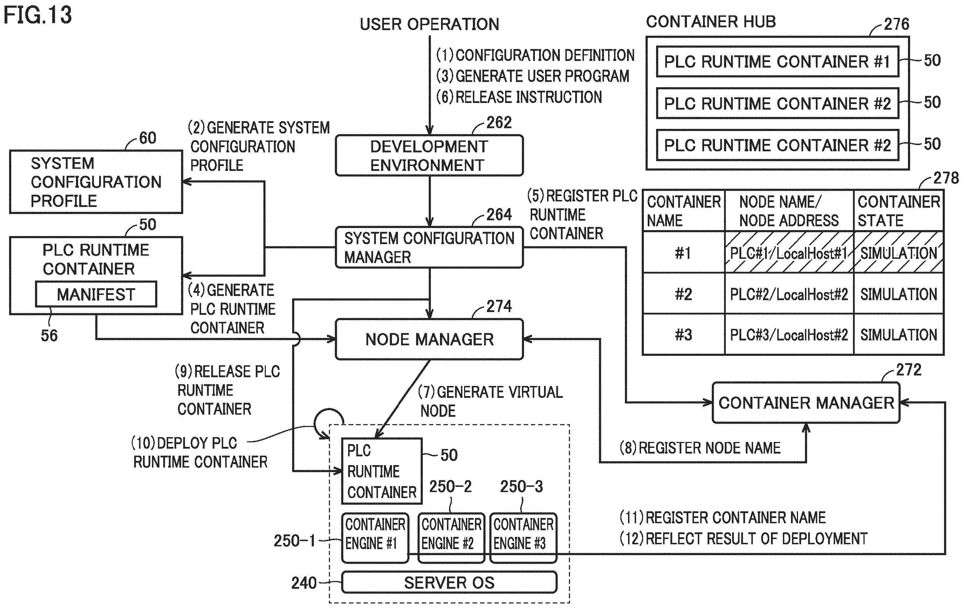

Fig. 13 is a diagram that schematically illustrates an example of processing steps in use case 1 illustrated in Fig. 12(A). Fig. 13 illustrates the processing steps of newly generating PLC runtime 510 (PLC runtime container 50) including user program 266. PLC runtime container 50 is released in the simulation mode.

With reference to Fig. 13, a user inputs the configuration definition of PLC system 2 to be designed ((1) configuration definition). Then, system configuration manager 264 generates system configuration profile 60 correspondingly to PLC system 2, configuration definition of which has been inputted ((2) generation of system configuration profile).

Then, the user generates user program 266 using development environment 262 ((3) generation of user program). System configuration manager 264 generates PLC runtime container 50 ((4) generation of PLC runtime container). Container manager 272 registers the generated PLC runtime container 50 in container hub 276 ((5) registration of PLC runtime container). When these processing steps are done, PLC runtime container 50 is successfully generated and then registered.

When the user inputs an instruction to release any PLC runtime container 50 (simulation mode in this instance) ((6) instruction of release), node manager 274 generates a virtual node which will be the destination of release ((7) generation of virtual node) and registers the address of the generated virtual node in repository 278 in a manner that the address is associated with the name of this node ((8) registration of node name). Then, the selected PLC runtime container 50 is transmitted to the virtual node as the destination of release ((9) release of PLC runtime container). A container engine 250-1 of the virtual node deploys PLC runtime container 50 ((10) deployment of PLC runtime container). Container engine 250-1 of the virtual node registers the container name of the deployed PLC runtime container 50 in repository 278 ((11) registration of container name). For communication of I/O data, container engine 250-1 of the virtual node may consult the content of repository 278 and thereby settle the node address corresponding to the node name of where the I/O data is transmitted or received.

Container engine 250-1 of the virtual node reflects details of an instance of PLC runtime container 50, which has been deployed and generated, on container hub 276 ((12) reflecting result of deployment). By thus having the instance details on container hub 276, reuse of PLC runtime container 50 may be facilitated at the time of rebooting using the virtual node.

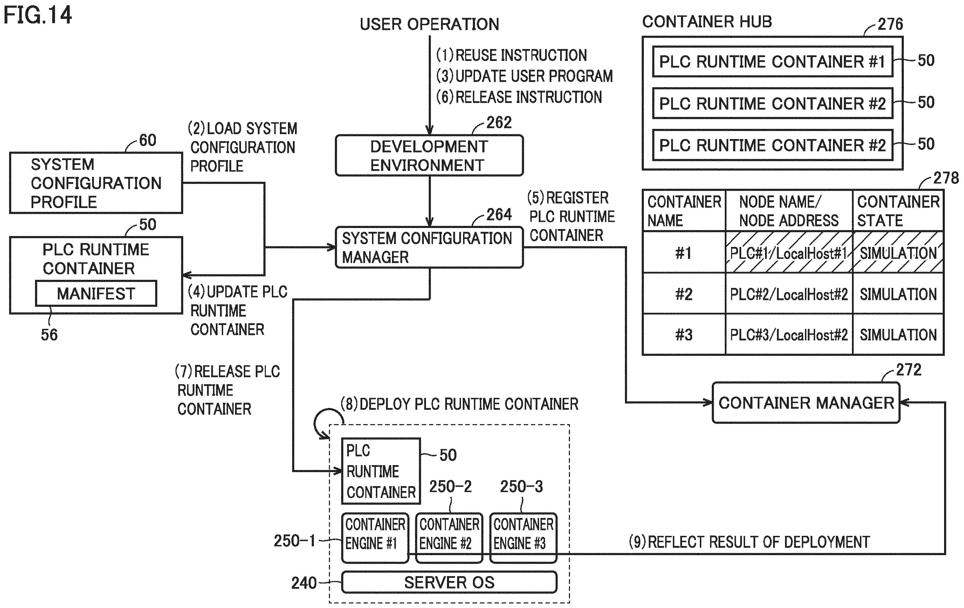

Fig. 14 is a diagram that schematically illustrates an example of processing steps in use case 1 illustrated in Fig. 12(A). Fig. 14 illustrates an exemplified reuse of PLC runtime container 50 generated according to the processing steps illustrated in Fig. 13. PLC runtime container 50 is released in the simulation mode.

With reference to Fig. 14, a user inputs an instruction to reuse PLC system 2 that has been generated ((1) instruction of reuse). Then, system configuration manager 264 loads system configuration profile 60 corresponding to PLC system 2 for reuse ((2) loading of system configuration profile).

Then, the user generates user program 266 using development environment 262 ((3) update of user program). System configuration manager 264 update PLC runtime container 50 ((4) update of PLC runtime container). Container manager 272 registers the updated PLC runtime container 50 in container hub 276 ((5) registration of PLC runtime container). When these processing steps are done, PLC runtime container 50 is successfully updated (regenerated) and then registered.

When a user inputs an instruction to releases any PLC runtime container 50 (simulation mode in this instance) ((6) instruction of release), PLC runtime container 50 accordingly selected is transmitted to a virtual node as the destination of release ((7) release of PLC runtime container). This example is suggested based on the assumption that the PLC runtime has already been achieved in the virtual node, which makes it unnecessary to newly generate a virtual node for release.

Container engine 250-1 of the virtual node deploys PLC runtime container 50 ((8) deployment of PLC runtime container). The PLC runtime corresponding to the updated user program is thus achievable. In most cases, update of the content of repository 278 may be unnecessary.

Container engine 250-1 of the virtual node reflects details of an instance of PLC runtime container 50, which has been deployed and generated, on container hub 276 ((9) reflecting result of deployment).

### <g2: Use case 2>

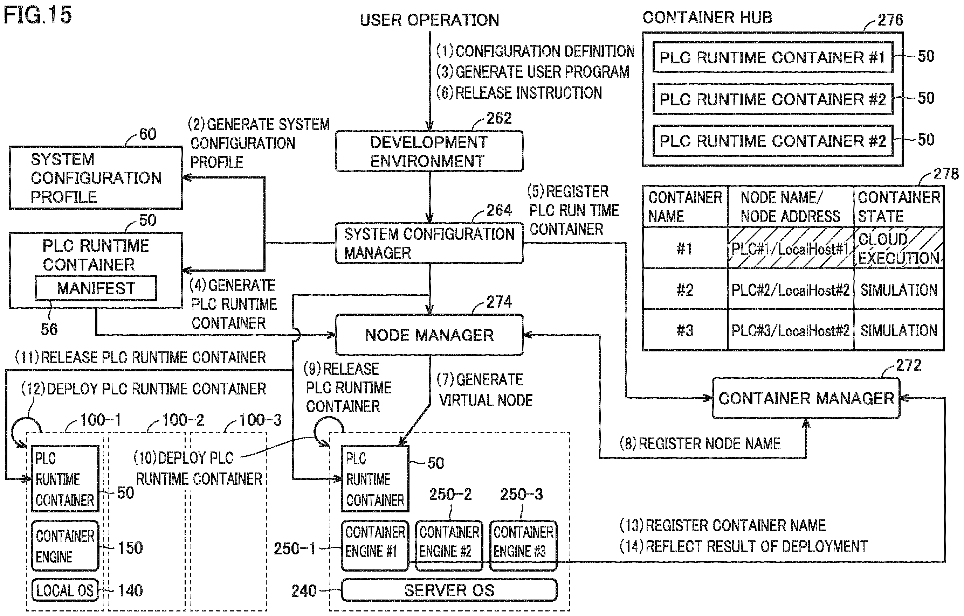

Fig. 15 is a diagram that schematically illustrates an example of processing steps in use case 2 illustrated in Fig. 12(B). Fig. 15 illustrates the processing steps of newly generating PLC runtime 510 (PLC runtime container 50) including user program 266. PLC runtime container 50 is released in the cloud execution mode.

With reference to Fig. 15, a user inputs the configuration definition of PLC system 2 to be designed ((1) configuration definition). Then, system configuration manager 264 generates system configuration profile 60 correspondingly to PLC system 2, configuration definition of which has been inputted ((2) generation of system configuration profile).

Then, the user generates user program 266 using development environment 262 ((3) generation of user program). System configuration manager 264 generates PLC runtime container 50 ((4) generation of PLC runtime container). Container manager 272 registers the generated PLC runtime container 50 in container hub 276 ((5) registration of PLC runtime container). When these processing steps are done, PLC runtime container 50 is successfully generated and then registered.

When the user inputs an instruction to release any PLC runtime container 50 (cloud execution mode in this instance) ((6) instruction of release), node manager 274 generates a virtual node which will be the destination of release ((7) generation of virtual node) and registers the address of the generated virtual node in repository 278 in a manner that the address is associated with the name of this node ((8) registration of node name).

Then, the selected PLC runtime container 50 is transmitted to the virtual node as the destination of release ((9) release of PLC runtime container). A container engine 250-1 of the virtual node deploys PLC runtime container 50 ((10) deployment of PLC runtime container). As a result of deployment by container engine 250-1, instances of the following are generated; PLC runtime 510, virtual I/O driver 520 and virtual I/O network client 530 (see Fig. 8(B)).

Then, PLC runtime container 50 thus selected is also transmitted to PLC 100-1 as the destination of release ((11) release of PLC runtime container). Container engine 150 of PLC 100-1 deploys PLC runtime container 50 ((12) deployment of PLC runtime container). As a result of this deployment by container engine 150, an instance of virtual I/O network server 540 is generated.

Container engine 250-1 of the virtual node registers the container name of the deployed PLC runtime container 50 in repository 278 ((13) registration of container name). Container engine 250-1 of the virtual node reflects details of an instance of PLC runtime container 50, which has been deployed and generated, on container hub 276 ((14) reflecting result of deployment).

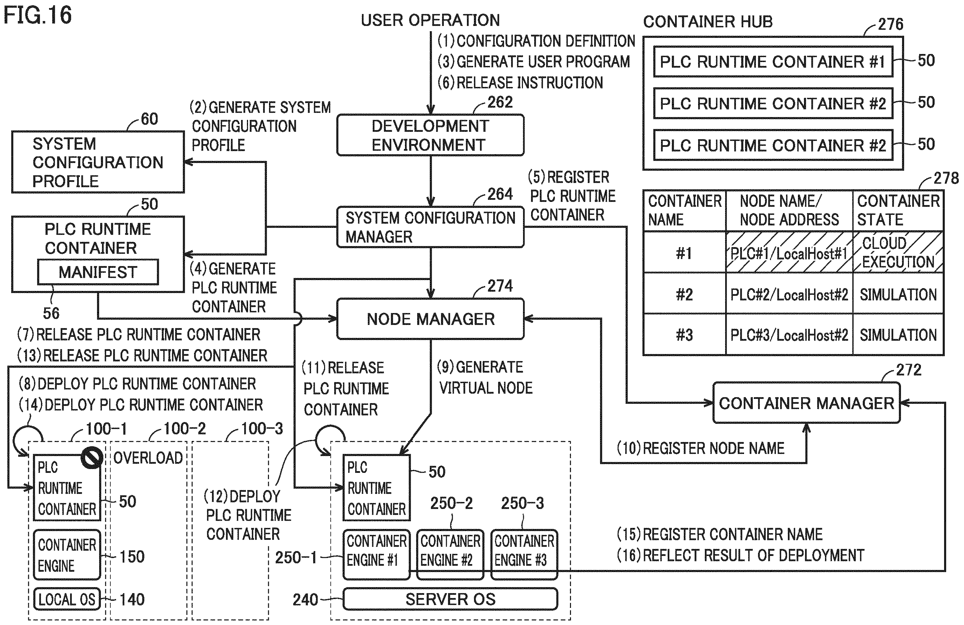

Fig. 16 is a diagram that schematically illustrates another example of processing steps in use case 2 illustrated in Fig. 12(B). Fig. 16 illustrates an example in which PLC runtime 510, once released in the local execution mode, is now released in the cloud execution mode due to the shortage of resources in PLC 100.

With reference to Fig. 16, a user inputs the configuration definition of PLC system 2 to be designed ((1) configuration definition). Then, system configuration manager 264 generates system configuration profile 60 correspondingly to PLC system 2, configuration definition of which has been inputted ((2) generation of system configuration profile).

Then, the user generates user program 266 using development environment 262 ((3) generation of user program). System configuration manager 264 generates PLC runtime container 50 ((4) generation of PLC runtime container). Container manager 272 registers the generated PLC runtime container 50 in container hub 276 ((5) registration of PLC runtime container). When these processing steps are done, PLC runtime container 50 is successfully generated and then registered.

When a user inputs an instruction to releases any PLC runtime container 50 (local execution mode in this instance) ((6) instruction of release), PLC runtime container 50 accordingly selected is transmitted to PLC 100-1 as the destination of release ((7) release of PLC runtime container). Container engine 150 of PLC 100-1 deploys PLC runtime container 50 ((8) deployment of PLC runtime container). It is assumed that the deployment of PLC runtime container 50 fails due to overload beyond the capacity of PLC 100-1.

In this instance, system configuration manager 264, for example, changes the processing mode from the local execution mode to the cloud execution mode. Node manager 274 generates a virtual node which will be the destination of release ((9) generation of virtual node) and registers the address of the generated virtual node in repository 278 in a manner that the address is associated with the name of this node ((10) registration of node name).

Then, PLC runtime container 50 thus selected is transmitted to a virtual node as the destination of release ((11) release of PLC runtime container). Container engine 250-1 of the virtual node deploys PLC runtime container 50 ((12) deployment of PLC runtime container).

Further, the selected PLC runtime container 50 is transmitted again to PLC 100-1 as the destination of release ((13) release of PLC runtime container). Container engine 150 of PLC 100-1 deploys PLC runtime container 50 in the cloud execution mode ((14) deployment of PLC runtime container). As a result of this deployment by container engine 150, an instance of virtual I/O network server 540 is generated.

Container engine 250-1 of the virtual node registers the container name of the deployed PLC runtime container 50 in repository 278 ((15) registration of container name). Container engine 250-1 of the virtual node reflects details of an instance of PLC runtime container 50, which has been deployed and generated, on container hub 276 ((16) reflecting result of deployment).

### <g3: Use case 3>

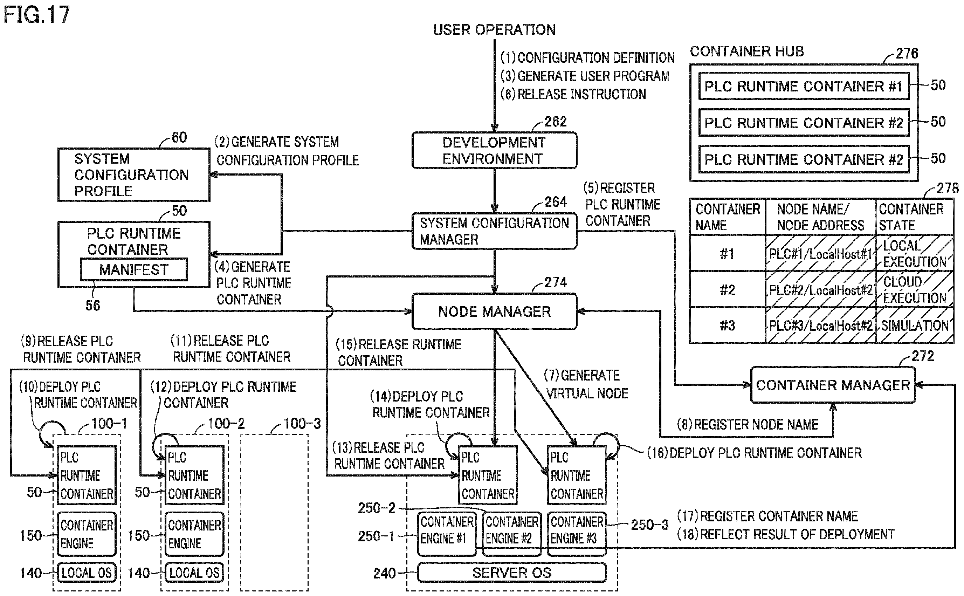

Fig. 17 is a diagram that schematically illustrates an example of processing steps in use case 3 illustrated in Fig. 12(C). Fig. 17 illustrates an example in which PLC runtime 510 is released in the local execution mode, cloud execution mode and simulation mode.

With reference to Fig. 17, a user inputs the configuration definition of PLC system 2 to be designed ((1) configuration definition). Then, system configuration manager 264 generates system configuration profile 60 correspondingly to PLC system 2, configuration definition of which has been inputted ((2) generation of system configuration profile).

Then, the user generates user program 266 using development environment 262 ((3) generation of user program). System configuration manager 264 generates PLC runtime container 50 ((4) generation of PLC runtime container). Container manager 272 registers the generated PLC runtime container 50 in container hub 276 ((5) registration of PLC runtime container). When these processing steps are done, PLC runtime container 50 is successfully generated and then registered.

For example, a user selects the local execution mode for PLC 100-1, and selects the cloud execution mode for PLC 100-2 and the simulation mode for PLC 100-3 ((6) instruction of release).

Node manager 274 generates a virtual node which will be the destination of release ((7) generation of virtual node) and registers the address of the generated virtual node in repository 278 in a manner that the address is associated with the name of this node ((8) registration of node name).

PLC runtime container 50 selected in the local execution mode is transmitted to PLC 100-1 as the destination of release ((9) release of PLC runtime container). Then, container engine 150 of PLC 100-1 deploys PLC runtime container 50 ((10) deployment of PLC runtime container).

PLC runtime container 50 selected in the cloud execution mode is transmitted to PLC 100-2 as the destination of release ((11) release of PLC runtime container). Then, container engine 150 of PLC 100-2 deploys PLC runtime container 50 ((12) deployment of PLC runtime container). PLC runtime container 50 selected in the cloud execution mode is also transmitted to a virtual node as the destination of release ((13) release of PLC runtime container). Then, container engine 250-2 of the virtual node deploys PLC runtime container 50 ((14) deployment of PLC runtime container).

PLC runtime container 50 selected in the simulation mode is also transmitted to a virtual node as the destination of release ((15) release of PLC runtime container). Then, container engine 250-3 of the virtual node deploys PLC runtime container 50 ((16) deployment of PLC runtime container).

Container engines 250-2 and 250-3 of the virtual node registers the deployed container name of PLC runtime container 50 in repository 278 ((17) registration of container name). Container engines 250-2 and 250-3 of the virtual node reflects details of an instance of PLC runtime container 50, which has been deployed and generated, on container hub 276 ((18) reflecting result of deployment).

### <H. Processing steps>

Next, exemplified processing steps carried out in control system 1 according to this embodiment are hereinafter described.

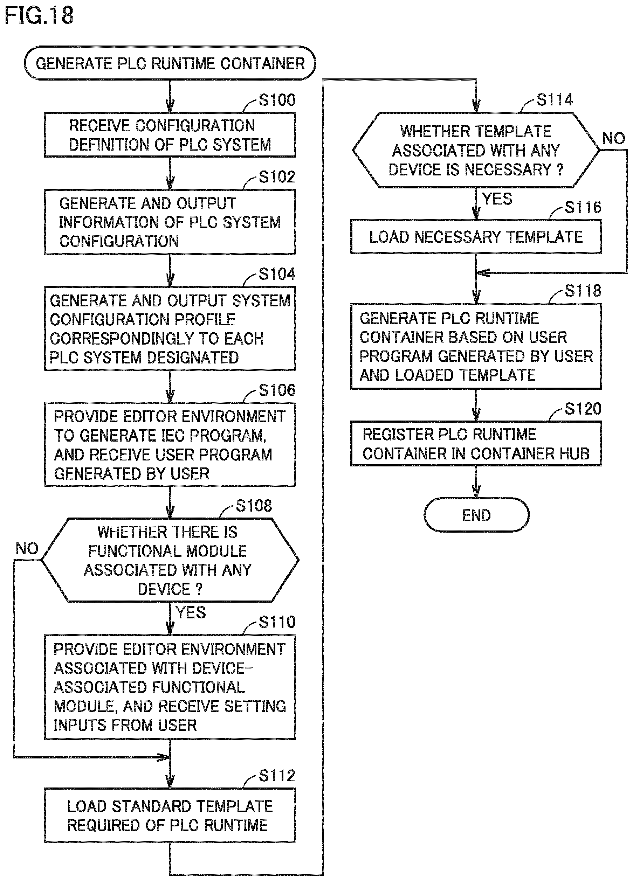

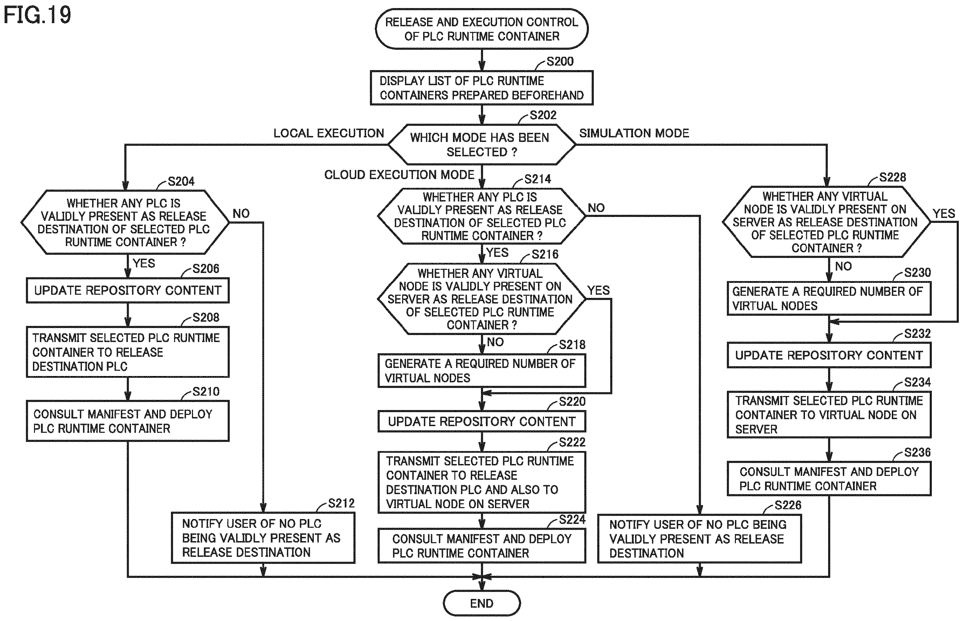

Fig. 18 is a flow chart of an example of processing steps for generating PLC runtime container 50 in control system 1 according to this embodiment. Fig. 19 is a flow chart of an example of processing steps for release and execution control of PLC runtime container 50 in control system 1 according to this embodiment. Typically, processor 202 of server 200 runs a program(s) to carry out the processing steps illustrated in Figs. 18 and 19.

With reference to Fig. 18, a user accesses development environment 262 to define the configuration of PLC system 2. Development environment 262 of server 200 accordingly receives the configuration definition of PLC system 2 from the user (step S100). Specifically, a user designates targeted PLC 100 and a device(s) connected to PLC 100 (motor(s) and robot(s)).

In response to the definition set by the user, development environment 262 of server 200 generates and outputs PLC system configuration information 268 (step S102). Then, system configuration manager 264 of server 200 generates and outputs system configuration profile 60 corresponding to PLC 100 thus designated (step S104). To be specific, system configuration manager 264 generates as many system configuration profiles 60 as PLC devices 100 designated earlier. System configuration profiles 60 thus generated each contain information of a device(s) connected to a corresponding PLC 100.

Development environment 262 of server 200 provides an editor environment for generating an IEC program and receives user program 266 generated by the user (step S 106).

Development environment 262 of server 200 consults system configuration profile 60 to determine whether there is any functional module associated with any device(s) connected to PLC 100 (step S 108). In the presence of any functional module associated with any device(s) connected to PLC 100 (YES in step S108), development environment 262 of server 200 offers an editor environment associated with a device-associated functional module(s) to receive various settings inputted by the user (step S110).

When the user's operation for settings is done, system configuration manager 264 of server 200 loads a standard template required of PLC runtime (step S112). System configuration manager 264 of server 200 consults system configuration profile 60 to determine whether any template associated with any device(s) connected to PLC 100 is necessary (step S114). In case a device-associated template(s) is found to be necessary (YES in step S114), system configuration manager 264 of server 200 loads a required template (step S116).

Then, system configuration manager 264 of server 200 generates PLC runtime container 50 based on the user program generated by the user and the loaded template (step S118).

Container manager 272 of server 200 registers PLC runtime container 50 generated by container generating module 260 in container hub 276 (step S120).

When these processing steps are done, PLC runtime container 50 is successfully generated. Thus, server 200 generates a container inclusive of an image of PLC runtime including a user program that defines computations for control of a control object and an execution environment of the user program.

With reference to Fig. 19, development environment 262 of server 200, in response to the user operation, consults container hub 276 and repository 278 to display a list of PLC runtime containers 50 prepared beforehand (step S200).

When the user selects any one of PLC runtime containers 50 and the modes, system configuration manager 264 of server 200 determines which of the modes has been selected (step S202).

When the local execution mode is selected ("local execution" in step S202), node manager 274 of server 200 consults system configuration profile 60 to determine whether PLC 100, to which the selected PLC runtime container 50 will be released, is validly present (step S204).

When any PLC 100 is found to be validly present as the destination of release (YES in step S204), container manager 272 of server 200, in response to the release of PLC runtime container 50, updates the content of repository 278 (step S206). Next, system configuration manager 264 of server 200 transmits the selected PLC runtime container 50 to PLC 100 as the destination of release (step S208). Container engine 150 of PLC 100 deploys PLC runtime container 50 with reference to manifest 56 included in PLC runtime container 50 (step S210). Thus, PLC runtime 510 is achievable in PLC 100 as the destination of release. Then, the processing steps are completed and over.

When any PLC 100 is not found to be validly present as the destination of release (NO in step S204), on the other hand, development environment 262 of server 200 notifies the user of no PLC 100 being validly present (step S212). Then, the processing steps are completed and over.

When the cloud execution mode is selected ("cloud execution mode" in step S202), node manager 274 of server 200 consults system configuration profile 60 to determine whether PLC 100, to which the selected PLC runtime container 50 will be released, is validly present (step S214).

When any PLC 100 is found to be validly present as the destination of release (YES in step S214), node manager 274 of server 200 consults system configuration profile 60 to determine whether any virtual node; the destination of release of the selected PLC runtime container 50, is validly present on server 200 (step S216).

Without any virtual node being validly present as the destination of release on server 200 (NO in step S216), node manager 274 of server 200 generates a required number of virtual nodes (step S218). The virtual node provides an environment where PLC runtime container 50 is deployable, inclusive of container engine 250.

When any virtual node is found to be validly present as the destination of release on server 200 (YES in step S216), step S218 is skipped.

Container manager 272 of server 200, in response to the release of PLC runtime container 50, updates the content of repository 278 (step S220). Next, system configuration manager 264 of server 200 transmits the selected PLC runtime container 50 to PLC 100 as the destination of release and also to the virtual node on server 200 (step S222). Container engine 250 included in the virtual node on server 200; the destination of container 50, deploys PLC runtime container 50 with reference to manifest 56 included in PLC runtime container 50 (step S224). Thus, virtual I/O network server 540 is achievable in the release destination, PLC 100, while PLC runtime 510 is achievable in the virtual node on server 200.

When no PLC 100 is found to be validly present as the destination of release (NO in step S214), on the other hand, development environment 262 of server 200 notifies the user of no PLC 100 being validly present (step S226). Then, the processing steps are completed and over.

When the simulation mode is selected ("simulation mode" in step S202), node manager 274 of server 200 consults system configuration profile 60 to determine whether a virtual node, to which the selected PLC runtime container 50 will be released, is validly present on server 200 (step S228).

Without any virtual node being validly present as the destination of release on server 200 (NO in step S228), node manager 274 of server 200 generates a required number of virtual nodes (step S230).

When any virtual node is found to be validly present as the destination of release on server 200 (YES in step S228), step S230 is skipped.

Container manager 272 of server 200, in response to the release of PLC runtime container 50, updates the content of repository 278 (step S232). Next, system configuration manager 264 of server 200 transmits the selected PLC runtime container 50 to the virtual node on server 200 (step S234). Container engine 250 included in the virtual node on server 200 deploys PLC runtime container 50 with reference to manifest 56 included in PLC runtime container 50 (step S236). In the virtual node on server 200, a simulation-feasible environment is successfully provided, inclusive of PLC runtime 510 and virtual I/O emulator 550. Thus, release of PLC runtime container 50 is carried out to one or both of PLC 100 and server 200.

### <I. Other embodiments>

For the purpose of illustration, server 200 is provided with container engine 250, container generating module 260 and orchestrator 270 (see Fig. 7). In case the entity of server 200 is virtualized and available on the cloud, all of these modules may be enabled by using one or more processors, instead of one hardware component alone.

### <J. Supplementary note>

The embodiments described thus far include the following technical ideas.

### [Configuration 1]

A control system (1) including one or more control devices (100) and one or more servers (200), the control system (1) comprising:
a generating module (260) configured to generate a container (50) inclusive of an image (51) of runtime (510) including a user program (266) that defines computations for control of a control object and an execution environment of the user program; and
an orchestrator (270) configured to release the container (50) to one or both of the control device and the server,
the control device and the server each having a container engine (150, 250) for container deployment and each deploy the container released by the orchestrator to generate an instance of the runtime (510) and perform the computations for control.

### [Configuration 2]

The control system according to configuration 1, wherein the container engine (250) of the server generates, in addition to the instance of the runtime, an instance of an emulator (550) configured to emulate input and output data transmitted and received to and from the control object.

### [Configuration 3]

The control system according to configuration 1, wherein, when the container engine (250) of the server generates the instance of the runtime, the container engine of the control device generates an instance of a network server (540) that mediates, to the server, the input and output data exchanged through a device (10) connected to the control device.

### [Configuration 4]

The control system according to any of configurations 1 to 3, wherein the container engine (250) of the server generates an instance of a virtual I/O driver (520) configured to emulate an I/O driver that is in charge of a process to access the device connected to the control device when the container engine of the server generates the instance of the runtime.

### [Configuration 5]

The control system according to any of configurations 1 to 4, wherein the container includes at least one of an image (54) deployed only by the container engine of the control device and an image (52, 53, 55) deployed only by the container engine of the server.

### [Configuration 6]

The control system according to any of configurations 1 to 5, further comprising a repository (278) for address management in order to access the container engine of the server when the container engine of the server generates the instance of the runtime.

### [Configuration 7]

The control system according to any of configurations 1 to 6, further comprising a node manager (274) configured to virtually generate a node that includes a container engine when no container engine is present that deploys a container at the time of releasing the container to the server.

### [Configuration 8]

The control system according to any of configurations 1 to 7, further comprising a container hub (276) configured to register the container generated by the generating module in a manner that the container is associated with identification information of the control device to which the container is releasable.

### [Configuration 9]

The control system according to any of configurations 1 to 8, wherein the orchestrator selects a container to be released and determines a destination of the container released in accordance with a user operation.

### [Configuration 10]

A control method in a control system including one or more control devices (100) and one or more servers (200), the method comprising:
generating a container inclusive of an image of runtime including a user program that defines computations for control of a control object and an execution environment of the user program (S 100 - S 120); and
releasing the container to one or both of the control device and the server (S200 - S234),
the control device and the server each having a container engine for container deployment and each deploy the container that has been released to generate an instance of the runtime and perform the computations for control.

### <K. Advantages>

According to the embodiments described herein, a control system may be provided that allow the container and orchestration technologies to be fully leveraged. These technologies may enable scalable use of server (cloud) resources at the time of, for example, simulation of computations for control, allowing any heavy and complicated simulations to be successfully performed in real time.

The embodiments described herein may allow the computations for control per se to be performed on the server while taking advantage of a device(s) connected to PLC. This may conduce to miniaturization and simplification of PLC as a field device.

The embodiments described herein may ensure that, in a controls system including a plurality of PLC devices, the computations for control may be carried out for each PLC in three different modes; local execution mode, cloud execution mode, and simulation mode. Some PLC devices may need to be combined and verified all together, in which case they can be combined for verification in one of these modes available and most suitable at the time. By thus verifying a suitable combination of control devices, any possible bottlenecks at the time of system integration may be detected and addressed in an early stage. This may advantageously reduce time conventionally required to start to operate the control system.

All of the embodiments are disclosed herein by way of illustration and example only and should not be construed as limiting by any means the scope of this disclosure. The scope of this disclosure is solely defined by the appended claims and is intended to cover the claims, equivalents, and all of possible modifications made without departing the scope of this disclosure.

### REFERENCE SIGNS LIST

1: control system, 2: PLC system, 4: control system network, 6: information system network, 8: Internet, 10: field device, 12: remote I/O, 14: relay group, 16: servo driver, 18: servo motor, 20: gateway, 50: runtime container, 51: PLC runtime image, 52: virtual I/O driver image, 53: virtual I/O network client image, 54: virtual I/O network server image, 55: virtual I/O emulator image, 56: manifest, 60: system configuration profile, 100: PLC, 102, 202, 302: processor, 104: chipset, 106, 206, 306: main memory, 110, 210, 310: storage, 112, 212, 312: OS, 114: system program, 120: information system network controller, 122: control system network controller, 124, 324: USB controller, 126: memory card interface, 128: memory card, 140: local OS, 142: physical I/O driver, 150, 250: container engine, 160: physical I/O, 200: server, 208, 308: bus, 220, 320: network controller, 226, 326: input unit, 228, 328: display unit, 240: server OS, 260: container generating module, 262: development environment, 264: system configuration manager, 266: user program, 268: system configuration information, 270: orchestrator, 272: container manager, 274: node manager, 276: container hub, 278: repository, 300: development/maintenance terminal, 304: optical drive, 305: recording medium, 314: developed program, 510: PLC runtime, 520: virtual I/O driver, 530: virtual I/O network client, 540: virtual I/O network server, 550: virtual I/O emulator

## Claims

1. A control system including one or more control devices and one or more servers, the control system comprising:
a generating module configured to generate a container inclusive of an image of runtime including a user program that defines computations for control of a control object and an execution environment of the user program; and
an orchestrator configured to release the container to one or both of the control device and the server,
the control device and the server each having a container engine for container deployment and each deploying the container released by the orchestrator to generate an instance of the runtime and perform the computations for control.

2. The control system according to claim 1, wherein the container engine of the server generates, in addition to the instance of the runtime, an instance of an emulator configured to emulate input and output data transmitted and received to and from the control object.

3. The control system according to claim 1, wherein, when the container engine of the server generates the instance of the runtime, the container engine of the control device generates an instance of a network server that mediates, to the server, input and output data exchanged through a device connected to the control device.

4. The control system according to any of claims 1 to 3, wherein the container engine of the server generates an instance of a virtual I/O driver configured to emulate an I/O driver that is in charge of a process to access the device connected to the control device when the container engine of the server generates the instance of the runtime.

5. The control system according to any of claims 1 to 4, wherein the container includes at least one of an image deployed only by the container engine of the control device and an image deployed only by the container engine of the server.

6. The control system according to any of claims 1 to 5, further comprising a repository for address management in order to access the container engine of the server when the container engine of the server generates the instance of the runtime.

7. The control system according to any of claims 1 to 6, further comprising a node manager configured to virtually generate a node that includes a container engine configured to deploy the container when the container is released to the server and no container engine is present.

8. The control system according to any of claims 1 to 7, further comprising a container hub configured to register the container generated by the generating module in a manner that the container is associated with identification information of the control device to which the container is releasable.

9. The control system according to any of claims 1 to 8, wherein the orchestrator selects a container to be released and determines a destination of the container released in accordance with a user operation.

10. A control method in a control system including one or more control devices and one or more servers, the method comprising:
generating a container inclusive of an image of runtime including a user program that defines computations for control of a control object and an execution environment of the user program; and
releasing the container to one or both of the control device and the server,
the control device and the server each having a container engine for container deployment and each deploying the container that has been released to generate an instance of the runtime and perform the computations for control.
